# EUROPEAN PATENT APPLICATION

(11) **EP 1 093 945 A1**
(43) Date of publication of application: **25.04.2001**
(21) Application number: 00122555.6
(22) Date of filing: 16.10.2000
(51) Int. Cl.: B60H 1/24, B60H 1/00

(54) **Method and apparatus for controlling an air-conditioning system of a vehicle**

(30) Priority: 18.10.1999 KR 9945171; 27.03.2000 KR 0015467
(71) Applicant: Lee, Joo-Hyoung, Kyoungki-Do (KR)
(72) Inventor: Lee, Joo-Hyoung, Kyoungki-Do (KR)
(74) Representative: Viering, Jentschura & Partner

(57) **Abstract**

An apparatus for controlling an air-conditioning system (90) of a vehicle includes a detecting means for generating a signal when a brake pedal (20) or a gas pedal (25) is actuated, a window driving means (60) for actuating up/down movements of windows (70) of the vehicle, an on/off switch for the air-conditioning system. This apparatus also includes a time-measuring means for measuring a period of time during which the brake or the gas pedal is not actuated, a controlling means for controlling the window actuating means and the on/off switch depending on the period of time measured by the time-measuring means and the signal generated by the detecting means. The apparatus prevents suffocation of occupants sleeping in the vehicle.

## Description

### Field of the Invention

The present invention relates to an apparatus for controlling air-conditioning systems of vehicles and a method therefor, more particularly to an apparatus for controlling air-conditioning systems of vehicles in order to prevent suffocation of occupants sleeping in the vehicle while the air-conditioning system operates and a method therefor.

### Background of the Invention

Modern vehicles are generally equipped with air-conditioning systems for heating or cooling the interior area thereof. Those air-conditioning systems such as heater or cooler have a duct structure that, when they are operated, interior air of the vehicle circulates without ventilation. And, windows of the vehicle usually remain closed during the operation of the air-conditioning system. However, if the air-conditioning system operates for a long time without any ventilation, carbon dioxide is increased and oxygen is decreased among the interior air of the vehicle, which makes occupants feel headache and have difficulty in breathing. Further, if occupants sleep in the vehicle for a long time while heater or cooler is operating, he could be suffocated.

Some devices have been suggested to solve this problem. One type of conventional device has a sensor for measuring oxygen content in the interior air. When content of oxygen detected from the interior air of the vehicle is lower than a certain level, operation of air-conditioning systems is automatically stopped. However, if the driver falls asleep during, the air-conditioning system stops its operation and do not restart until the driver manually makes it start. This causes temperature increase in the interior area of the vehicle and makes the driver feel headache or have difficulty in breathing. Further, it is difficult to implement the oxygen content detecting sensor at reasonable costs.

Another device includes two type of sensors, one for monitoring motions of occupants in vehicles and the other for measuring oxygen content of the interior air of the vehicle and comparing it with that of ambient air. This device further includes an alarming means for making a phone call to a designated number and making a sound alarm such that, when the presence of occupants like infants or the disabled detected by the motion detecting sensor and oxygen content decreases below a certain level, the alarming unit makes a phone call to the designated number and emits an alarm sound. However, the motion detecting sensor may not detect the presence of occupants if they are sleeping, which means that occupants could still experience suffocation. And as described above, it is difficult to implement the oxygen content detecting sensor at reasonable costs.

### Summary of the Invention

In the view of the prior art described above, therefore, it is the object of the present invention to provide an apparatus and method for controlling air-conditioning system to prevent suffocation of occupants sleeping in a vehicle while the air-conditioning system operates.

In accordance with one aspect of the present invention, there is provided an apparatus for controlling air-conditioning systems of vehicles, comprising a detecting means for generating a signal when a brake pedal or a gas pedal is actuated, a window driving means for actuating up/down movements of windows of the vehicle, a on/off switch for the air-conditioning system, a time-measuring means for measuring a period of time during which the brake or the accelerator is not actuated, a controlling means for controlling the window actuating means and the on/off switch depending on the period of time measured by the time-measuring means and the signal generated by the detecting means, whereby the apparatus prevents suffocation of occupants sleeping in the vehicle.

In accordance with other aspect of the present invention, there is provided a method for controlling air-conditioning systems of vehicles, comprising (a) setting a time-measuring means, (b) detecting actuation of a brake pedal or an gas pedal, (c) comparing a period of time with a first predetermined period, (d) actuating a window driving means to drive windows down and setting an on/off switch for the air-conditioning system to off position, (e) actuating a window driving means to drive windows up and setting an on/off switch for the air-conditioning system to on position after a second predetermined period passed, and (f) repeating the step (d) and (e) until the brake pedal or the gas pedal is actuated.

### Brief Description of the Drawings

The above and other object, features and advantages of the present invention will become more apparent from the following description when taken in conjunction with the accompanying drawings in which a preferred embodiment of the present invention is shown by way of illustrative example.
Figure 1 shows a block diagram illustrating a schematic arrangement of an apparatus according to the present invention.
Figure 2 shows a flow chart for depicting the operation of the illustrative apparatus shown in FIG. 1.

### Detailed Description of the Preferred Embodiments

The preferred embodiments of the present invention will now be described in detail with reference to the accompanying drawings.

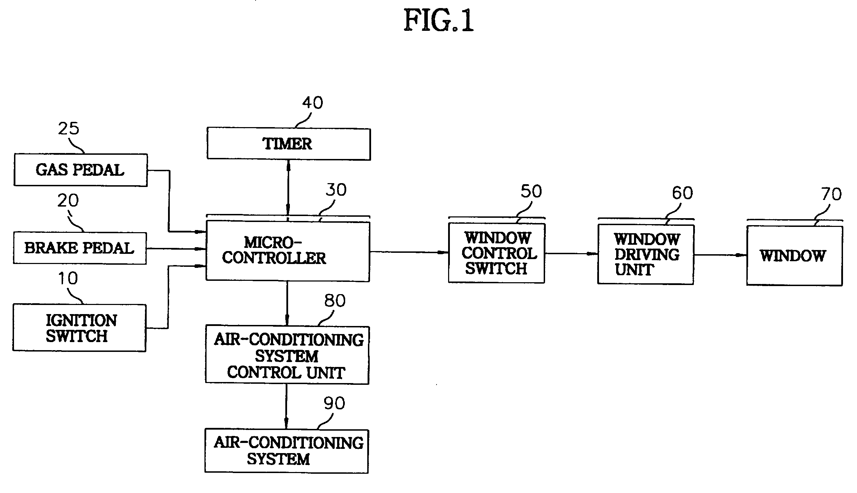

Fig. 1 represents a schematic block diagram illustrating an apparatus according to the present invention. The apparatus includes a microprocessor 30 for controlling both an air-conditioning system 90 and a windows driving unit 60, as will be described in more detail below. An ignition switch 10 is electrically connected with the microprocessor 30. A brake pedal 20 and a gas pedal 25 of the vehicle are also electrically connected with microprocessor 30, respectively, via sensors such as gap sensor or the like. In Fig. 1, the brake or gas pedal and the sensors thereof are represented as a single block for simplicity. Any type of sensor generating signals when the brake pedal or the gas pedal is pressed may be used. Also, those conventional sensors coupled with the brake pedal or the gas pedal and generating input signals for engine control circuit may be used as the sensors.

The period of time during which neither the brake pedal nor the gas pedal is actuated is measured by, for example, timer 40 or other type of time-measuring devices.

An air-conditioning system 90 and a control unit 80 for the air-conditioning system are also shown in Fig. 1. The air-conditioning system 90 such as heater or cooler for vehicles generally includes a compressor, a blower and a plurality of valves located in a duct structure providing passages for air flows. These devices are operated by the air-conditioning system control unit 80, which is electrically connected with the microprocessor 30. Also, a windows driving unit 60 for vehicles is shown in Fig. 1. The windows driving unit 60 generally includes motors. The operation of motor and its direction of rotation are determined by a three-way switch 50. The three-way switch 50 has UP position and DOWN position, which corresponds to upward movement and downward movement of windows, respectively. When the three-way switch is in neutral position, motor performs no rotation, and no movement of windows will happen. As illustrated in Fig. 1, the three-way switch 50 is also connected with the microprocessor 30.

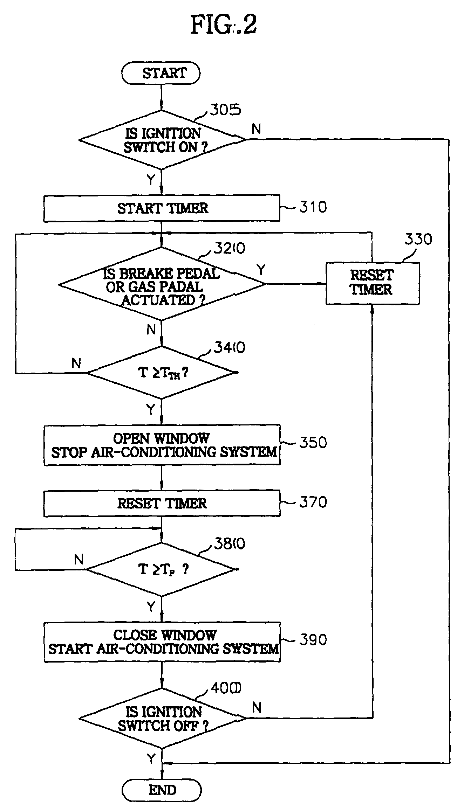

The operation of the illustrative system shown in Fig. 1 will be explained in detail below with reference to a flow chart shown in Fig. 2.

First, an ignition switch 10 is turned on and power is applied, as shown by block 305. Then, a timer 40 is set as shown by block 310. Next, a check is made to determine whether a brake pedal or a gas pedal is pressed, as shown at conditional block 320. If either one is actuated, the method returns to block 320 after the timer 40 is reset, as shown by block 330. If both the brake pedal and the gas pedal are not actuated, a check is made as to whether or not the timer 40 is timed out, i.e. whether or not time has reached a first predetermined period, for example threshold time TTH, as shown at conditional block 340. The threshold time TTH is considered as a period of time that the interior air of the vehicle should be ventilated in order to prevent suffocation of the occupants. Preferably, it may be less than about 30 minutes. If the timer 40 is not timed out, the method returns again to block 320 and continues to determine whether the brake pedal or the gas pedal is actuated until the timer 40 is timed out. If the timer 40 has timed out, the window switch 50 is changed to DOWN position, which makes windows are open, and the air-conditioning system 90 is shut down, as shown by block 350. All or some of the windows may open. Also, windows may be open completely, or preferably just partly, for example 30 to 50%. Next, a check is made whether time has reached a certain time Tp, for example about 1 to 2 minutes, as shown at conditional block 380. After time has reached the second predetermined period Tp, the window switch 50 is changed to UP position, which makes the window closed, and the air-conditioning system 90 start again, as shown by block 390. Then, the method returns to the block 320 after a check is made whether the ignition switch is off, as shown by block 400, and repeats aforementioned steps. If the ignition switch 10 is in off state, the method will be ended.

According to the preferred embodiment of the present invention, suffocation of occupants in vehicles can be prevented. When a driver or a passenger is sleeping in a vehicle with the air-conditioning system turned on and windows closed, the apparatus of the present invention assumes the presence of occupants by the power-on state of the ignition switch. If a brake pedal or a gas pedal is not actuated for a certain period of time, the apparatus assumes that the occupant is sleeping and automatically shut down the air-conditioning system and opens the windows. When a certain period of time passed, the air-conditioning system is turned on and windows are closed. These steps are repeated until the occupants wake up and press the brake pedal or the gas pedal.

## Claims

1. An apparatus for controlling an air-conditioning system of a vehicle, comprising:
a detecting means for generating a signal when a brake pedal or a gas pedal is actuated;
a window driving means for actuating up/down movements of windows of the vehicle;
an on/off switch for the air-conditioning system;
a time-measuring means for measuring a period of time during which the brake pedal or the gas pedal is not actuated;
a controlling means for controlling the window actuating means and the on/off switch depending on the period of time measured by the time-measuring means and the signal generated by the detecting means,
whereby the apparatus prevents suffocation of occupants sleeping in the vehicle.

2. An apparatus according to claim 1, wherein the controlling means generates a down movement signal for the windows driving means and an off signal for the on/off switch when the period of time exceeds a first predetermined period.

3. An apparatus according to claim 1, wherein the controlling means generate an up-movement signal for the windows driving means and an on-signal for the on/off switch when the period of time exceeds a second predetermined period.

4. A method for controlling an air-conditioning system of a vehicle, comprising:
(a) setting a time-measuring means;
(b) detecting actuation of a brake pedal or a gas pedal;
(c) comparing a period of time with a first predetermined period;
(d) actuating a window driving means to drive windows down and setting an on/off switch for the air-conditioning system to off position;
(e) actuating a window driving means to drive windows up and setting an on/off switch for the air-conditioning system to on position after a second predetermined period passed; and
(f) repeating step (d) and (e) until the brake pedal or the gas pedal is actuated.
